# EUROPÄISCHE PATENTSCHRIFT

(11) **EP 4 018 108 B1**
(45) Veröffentlichungstag und Bekanntmachung des Hinweises auf die Patenterteilung: **08.10.2025**
(21) Anmeldenummer: 20757851.9
(22) Anmeldetag: 11.08.2020
(51) Int. Cl.: F16D 13/68, F16D 13/74

(54) **SYSTEM AUS KUPPLUNGSSCHEIBE BZW. REIBSCHEIBE UND KUPPLUNGSGLOCKE ZUM BEWIRKEN EINER REDUZIERTEN SCHLEPPLEISTUNG**
SYSTEM COMPOSED OF CLUTCH DISC OR FRICTION DISC AND CLUTCH CASE FOR EFFECTING A REDUCED DRAG RESISTANCE
SYSTÈME COMPOSÉ D'UN DISQUE D'EMBRAYAGE OU DISQUE DE FRICTION ET BOÎTIER D'EMBRAYAGE PERMETTANT D'OBTENIR UNE RÉSISTANCE À LA TRAÎNÉE RÉDUITE

(30) Priorität: 21.08.2019 DE 102019122483
(43) Veröffentlichungstag der Anmeldung: 29.06.2022
(73) Patentinhaber: KNORR-BREMSE Systeme für Nutzfahrzeuge GmbH, 80809 München (DE)
(72) Erfinder: MELLAR, Jörg, 85652 Pliening (DE); WEINHOLD, Thomas, 81545 München (DE); MARESCOT, Jean-Baptiste, 14340 Manerbe (FR); AMIOT, Frederic, 14290 Saint-Cyr-du-Ronceray (FR); SAINTIVE, Michel, 14340 Le Pré d'Auge (FR)
(86) Internationale Anmeldenummer: PCT/EP2020/072547
(87) Internationale Veröffentlichungsnummer: WO 2021/032547

(56) Entgegenhaltungen:
- EP-A1- 3 181 932
- EP-A1- 3 181 932
- WO-A2-2009/112243
- WO-A2-2009/112243
- DE-A1- 102006 042 057
- DE-A1- 102006 042 057
- DE-T5- 112011 102 051
- DE-T5- 112011 102 051

## Beschreibung

Die vorliegende Erfindung betrifft ein System aus Kupplungsscheibe bzw. Reibscheibe und Kupplungsglocke zum Bewirken einer reduzierten Schleppleistung.

Nutzfahrzeuge weisen Druckluftverbraucher auf, wie beispielsweise ein pneumatisches Bremssystem, eine Luftfederungsanlage oder eine pneumatische Kupplung. Für diese Druckluftverbraucher wird ein Drucklufterzeuger vorgesehen, wie beispielsweise ein Kompressor. Ein solcher Kompressor wird in der Regel durch den Fahrzeugmotor angetrieben, beispielsweise durch eine Verbrennungskraftmaschine eines Nutzfahrzeugs.

Nutzfahrzeuge weisen des Weiteren Druckluftspeicher auf. In diesen Druckluftspeichern wird die von einem Drucklufterzeuger erzeugte Druckluft zwischengespeichert, bis diese von einem Druckluftverbraucher verbraucht wird.

Wenn ein Druckluftspeicher mit Druckluft gefüllt ist, sodass ein entsprechender Abschaltdruck vorliegt, wird der Drucklufterzeuger gemäß des Standes der Technik temporär von seinem Antrieb abgekoppelt, um Energie einzusparen. Ein solches Abkoppeln geschieht mittels einer Lamellenkupplung, die zwischen dem Fahrzeugmotor und dem Drucklufterzeuger zum Unterbrechen und Wiederherstellen der Drehmomentübertragung vorgesehen ist.

Hierzu ist diese Lamellenkupplung so konstruiert, dass eine Drehmomentübertragung zwischen einer radial außen liegenden Kupplungsglocke sowie einer radial innen liegenden Welle mittels Reibschluss hergestellt und wieder getrennt werden kann. Dieser Reibschluss wird mittels Kupplungsscheiben (beispielsweise aus Stahl) und Reibscheiben (beispielsweise mit aufgeprägtem Reibbelag) hergestellt, wobei die Kupplungsscheiben formschlüssig und drehmomentfest in die Kupplungsglocke eingreifen, und die Reibscheiben formschlüssig und drehmomentfest in die Welle eingreifen (wobei alternativ hierzu auch eine umgekehrte Anordnung möglich ist).

Eine solche Lamellenkupplung ist des Weiteren vorzugsweise ölgeflutet bzw. nasslaufend ausgeführt, um entstehende Reibungswärme abzuführen. Auch im Zustand einer geschlossenen Kupplung strömt hierzu Öl zwischen den einzelnen Kupplungsscheiben sowie Reibscheiben von radial innen nach radial außen (aufgrund von Fliehkraft), um Reibungswärme aufzunehmen und abzuführen. Um ein solches Durchströmen (zwischen den geschlossenen bzw. aneinander anliegenden Kupplungsscheiben und Reibscheiben) zu ermöglichen, weisen alle Reibscheiben strukturierte Reibbeläge auf, um radial nach außen verlaufende Kanäle zwischen den einzelnen Kupplungsscheiben und den mit diesen in Reibkontakt stehenden Reibscheiben auszubilden. Durch diese Kanäle wird ein Öldurchfluss auch im geschlossenen Zustand der Kupplung ermöglicht.

Bei ölgefluteten (nasslaufenden) Lamellenkupplungen gemäß des Standes der Technik besteht ein Problem bzgl. der Schleppleistung. Insbesondere nach einem wiederholten und häufigen Ein- und Auskuppeln drehen sich die ausgekuppelten Kupplungsscheiben bzw. Reibscheiben im Ölbad, wodurch unerwünscht Drehmoment zwischen diesen aufgrund der Viskosität des Öls übertragen wird.

Ölgeschmierte (nasslaufende) Lamellenkupplungen gemäß des Standes der Technik weisen, wie bereits einleitend beschrieben, eine Kupplungsglocke auf, sowie Kupplungsscheiben, die mit der Kupplungsglocke mittels Formschluss ein Drehmoment übertragen. Hierzu weisen die Kupplungsscheiben an ihrem Umfang radial nach außen ragende Zähne auf, wobei die Kupplungsglocke an ihrer Innenfläche Nuten zum Aufnehmen der Zähne aufweist. Alternativ hierzu, gem. der "umgekehrten Anordnung", übertragen die Reibscheiben (anstatt der Kupplungsscheiben) mit der Kupplungsglocke mittels Formschluss ein Drehmoment, und die Kupplungsscheiben (anstatt der Reibscheiben) mit der Welle mittels Formschluss ein Drehmoment.

Im Kontext dieser Patentanmeldung wird nachfolgend ein System aus Kupplungsglocke und Kupplungsscheibe(n) beschrieben, wobei Kupplungsglocke und Kupplungsscheibe(n) formschlüssig und drehmomentfest ineinander eingreifen. Wie bereits einleitend als "umgekehrte Anordnung" beschrieben, sind auch Ausgestaltungen denkbar, bei denen nicht die Kupplungsscheiben, sondern die Reibscheiben formschlüssig in die Kupplungsglocke eingreifen. Vereinfacht wird nachfolgend aber lediglich eine dieser beiden Varianten beschrieben. Trotzdem werden hierdurch die beschriebenen Merkmale ebenfalls auch für eine Reibscheibe gemäß der "umgekehrten Anordnung" analog offenbart.

Um das obige Problem bzgl. der Schleppleistung zu lösen, muss gewährleistet werden, dass das Öl möglichst ungehindert zwischen den einzelnen Kupplungsscheiben und Reibscheiben abfließen kann. Da das Öl bei einer rotierenden Kupplung aufgrund der Fliehkraft radial nach außen gedrückt wird, muss das Öl im Bereich des (radial außen liegenden) Zusammenspiels zwischen Zähnen und Nuten aus den Zwischenräumen zwischen den einzelnen Kupplungsscheiben und Reibscheiben abfließen können.

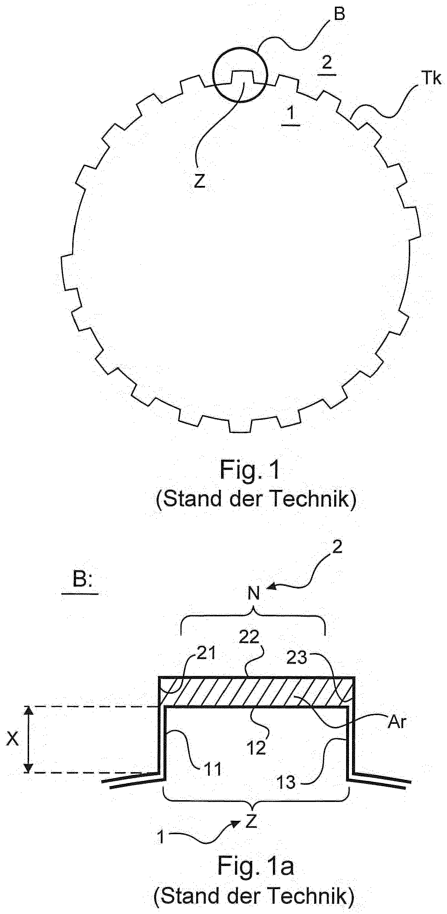

Diesbezüglich wird auf **Fig. 1** verwiesen, die eine Trennkontur Tk zwischen einer Kupplungsscheibe 1 (radial innen liegend) und einer Kupplungsglocke 2 (radial außen liegend) zeigt. In Fig. 1 ist ein Bereich B des Zusammenspiels zwischen einem Zahn Z (der Kupplungsscheibe 1) und einer Nut (der Kupplungsglocke 2) mit einem Kreis markiert, wobei dieser Bereich in Fig. 1a im Detail dargestellt wird.

**Fig. 1a** zeigt den oben erwähnten Bereich des Zusammenspiels zwischen einem Zahn Z (der Kupplungsscheibe 1) und einer Nut N (der Kupplungsglocke 2) im Detail. Die dargestellte Nut N der Kupplungsglocke 2 weist in radialer Richtung verlaufende seitliche Flanken 21, 23 auf, sowie eine radial außenliegende in Umfangsrichtung verlaufende Umfangskante 22. Die Nut N ist zum Aufnehmen des dargestellten Zahns Z der Kupplungsscheibe 1 ausgebildet.

Der dargestellte Zahn Z weist in radialer Richtung verlaufende seitliche Flanken 11, 13 auf, sowie eine radial außenliegende, in Umfangsrichtung verlaufende und die seitlichen Flanken 11, 13 verbindende Umfangskante 12.

Zwischen der Umfangskante 12 der Kupplungsscheibe 1 und den seitlichen Flanken 21, 23 der Kupplungsglocke 2 sowie der radial außen liegenden Umfangskante 22 der Kupplungsglocke 2 wird ein Ölrücklaufquerschnitt Ar gebildet, der in Fig. 1a schraffiert dargestellt ist. Der Ölrücklaufquerschnitt im Bereich des Zusammenspiels zwischen allen Zähnen Z (der Kupplungsscheibe 1) und allen Nuten (der Kupplungsglocke 2) wird als Gesamtölrücklaufquerschnitt definiert.

Bei einem Trennen der Kupplung auf die oben genannte Art und Weise muss demnach das durch Zentrifugalkräfte radial außen befindliche Öl durch den Gesamtölrücklaufquerschnitt hindurchtreten, um aus den Zwischenräumen zwischen den einzelnen Kupplungsscheiben 1 der Kupplung abfließen zu können.

Im Stand der Technik ist es bekannt, dass eine Vergrößerung des Gesamtölrücklaufquerschnitts zu einer Reduktion der Schleppleistung führt, da das Öl, wie oben beschrieben, schneller durch den vergrößerten Gesamtölrücklaufquerschnitt hindurchtreten kann, um zwischen den einzelnen Kupplungsscheiben 1 der Kupplung abzufließen. Dies führt allerdings zu den nachfolgend beschriebenen Problemen.

In Fig. 1a wird des Weiteren ein radial verlaufender Kontaktbereich X zwischen den seitlichen Flanken 11, 13 der Kupplungsscheibe 1 und den seitlichen Flanken 21, 23 der Kupplungsglocke 2 dargestellt. In diesem Kontaktbereich X tritt ein Flächenkontakt zur Drehmomentübertragung zwischen Kupplungsscheibe 1 und Kupplungsglocke 2 auf. Zum Vergrößern des Gesamtölrücklaufquerschnitts wäre es nun möglich, den Kontaktbereich X zu verkürzen, beispielsweise durch ein Verkürzen der Zähne Z, was einem Verkürzen der seitlichen Flanken 11, 13 entspräche. Hierdurch entstünde allerdings ein Verschleißproblem, da in einem solchen Fall die gesamte drehmomentübertragende Fläche (zwischen Kupplungsscheibe 1 und Kupplungsglocke 2) verringert werden würde, was zu einer höheren Belastung im reduzierten Kontaktbereich X führen würde.

Im Stand der Technik ist es bekannt, Kupplungsscheiben 1 mit "fehlenden Zähnen" vorzusehen, um hierdurch den Gesamtölrücklaufquerschnitt zu vergrößern. Allerdings ergibt sich auch hieraus ein Verschleißproblem, da auch in diesem Fall die gesamte drehmomentübertragende Fläche (= Summe der Kontaktflächen zwischen Kupplungsscheibe 1 und Kupplungsglocke 2) auf Grund der fehlenden Zähne verringert wird.

Um die o.g. Verschleißproblematik zu vermeiden, während trotzdem der Gesamtölrücklaufquerschnitt vergrößert wird, ist es im Stand der Technik bekannt, zusätzliche Nuten in der Kupplunqsqlocke 2 vorzusehen. Allerdings steigen hierdurch die Fertigungskosten der Kupplungsglocke 2 an.

Alternativ offenbart die WO 2009/112243 A2 eine nasslaufende Lamellenkupplung, mit in einem Kupplungsgehäuse angeordneten, ringförmigen Kupplungslamellen, die alternierend in Stahllamellen und Reibscheiben aufgeteilt sind. Die Stahllamellen sind mit einer radial äußeren Verzahnung in Umfangsrichtung formschlüssig mit dem Kupplungsgehäuse verbunden, wobei in den Stahllamellen als Ölrücklaufquerschnitte Ausnehmungen vorgesehen sind. Zur Verminderung eines ggf. auftretenden Schleppmomentes bei gelöster Lamellenkupplung wird dabei vorgeschlagen, dass die Ausnehmungen im Wesentlichen radial außerhalb der wirksamen, ringförmigen Reibflächen der Stahllamellen in zumindest einige der Zähne der Verzahnung eingearbeitet sind.

Es ist daher eine Aufgabe der Erfindung, eine Kupplungsscheibe bzw. Reibscheibe sowie ein System aus Kupplungsscheibe bzw. Reibscheibe und Kupplungsglocke zum Bewirken einer reduzierten Schleppleistung vorzusehen, die günstig herzustellen und langlebig sind.

Diese Aufgabe wird gelöst durch den Gegenstand des unabhängigen Anspruchs. Bevorzugte Weiterbildungen sind Gegenstand der Unteransprüche.

Die anspruchsgemäße Kupplungsscheibe bzw. Reibscheibe des unabhängigen Anspruchs definiert und beansprucht das Bauteil, welches formschlüssig und drehmomentfest in die Kupplungsglocke eingreift, unabhängig davon, ob dieses Bauteil den Reibbelag (gem. der o.g. "umgekehrten Anordnung") aufweist, und somit als Reibscheibe anzusehen ist, oder nicht. Nachfolgend wird allerdings lediglich auf eine anspruchsgemäße Kupplungsscheibe eingegangen. Die getroffenen Aussagen gelten für eine anspruchsgemäße Reibscheibe gem. der "umgekehrten Anordnung" analog.

Wie oben beschrieben weist eine Kupplungsscheibe mehrere radial nach außen ragende Zähne mit seitlichen Flanken zum Übertragen eines Drehmoments zwischen Kupplungsscheibe und einer Kupplungsglocke auf. Die Kupplungsscheibe weist des Weiteren die seitlichen Flanken eines jeden Zahns verbindende, in Umfangsrichtung verlaufende, radial außen liegende Umfangskanten auf.

Des Weiteren weist die Kupplungsglocke seitliche Flanken zum Übertragen eines Drehmoments zwischen ihr und der Kupplungsscheibe auf. Darüber hinaus weist die Kupplungsglocke radial außen liegende, d.h. radial nach innen gerichtete, in Umfangsrichtung verlaufende Umfangskanten auf, welche ihre seitlichen Flanken verbinden. Durch zwei seitliche Flanken und eine diese Flanken verbindende, radial außen liegende Umfangskante wird eine einzelne Nut der Kupplungsglocke ausgebildet.

Im montierten Zustand befinden sich die Zähne der Kupplungsscheibe innerhalb der Nuten der Kupplungsglocke. Dabei wird zwischen jeder Nut, in der sich ein Zahn befindet, und diesem Zahn ein Ölrücklaufquerschnitt ausgebildet. Des Weiteren wird durch jede Nut, in der sich kein Zahn befindet, ebenfalls ein Ölrücklaufquerschnitt ausgebildet. Die Summe aller Ölrücklaufquerschnitte wird als Gesamtölrücklaufquerschnitt bezeichnet.

Zwischen einer Nut, in der sich ein Zahn befindet, und diesem Zahn wird ein Ölrücklaufquerschnitt wie nachfolgend beschrieben ausgebildet. Zwischen der radial außen liegenden Umfangskante des Zahns und den seitlichen Flanken der Nut sowie der radial außen liegenden Umfangskante der Nut wird ein Querschnitt gebildet, der als Ölrücklaufquerschnitt angesehen wird.

Erfindungsgemäß wird in der radial außen liegenden Umfangskante wenigstens eines Zahns der Kupplungsscheibe eine Ausnehmung vorgesehen, um den Ölrücklaufquerschnitt zwischen diesem Zahn und der Nut, in welcher er sich befindet, zu vergrößern.

Hierdurch wird ein Kontaktbereich der seitlichen Flanken von Zahn und Nut trotz einer Vergrößerung des Ölrücklaufquerschnitt nicht verringert, wodurch ein ungehindertes Abfließen des Öls ohne eine Verschlechterung des Verschleißes besser erfolgt. Hierdurch wird die Schleppleistung einer Kupplung reduziert, ohne hierdurch den Verschleiß zu erhöhen.

Des Weiteren ist das Vorsehen einer Ausnehmung in einer Kupplungsscheibe kostengünstiger zu realisieren als in einer Kupplungsglocke, wodurch die Fertigungskosten sinken.

Durch ein bogenförmiges Ausbilden der Ausnehmung wird die Vergrößerung des Ölrücklaufquerschnitts maximiert, bei gleichzeitiger Minimierung der Materialspannungen.

Vorzugsweise weist nicht nur ein einziger Zahn der Kupplungsscheibe eine erfindungsgemäße Ausnehmung auf, sondern mehrere Zähne der Kupplungsscheibe. Vorzugsweise sind die eine Ausnehmung aufweisenden Zähne gegenüberliegend angeordnet.

Vorzugsweise weisen alle Zähne der Kupplungsscheibe eine erfindungsgemäße Ausnehmung auf.

Vorzugsweise werden alle Nuten einer Kupplungsglocke durch einen Zahn einer Kupplungsscheibe ausgefüllt. Wenigstens einer dieser Zähne weist eine erfindungsgemäße Ausnehmung auf. Hierdurch wird trotz einer Vergrößerung des Gesamtölrücklaufquerschnitts der Verschleiß minimiert.

Alternativ dazu wird gemäß einer weiteren bevorzugten Ausführungsform neben einer Kupplungsscheibe mit wenigstens einem Zahn, der eine erfindungsgemäße Ausnehmung aufweist, außerdem wenigstens ein Zahn "weggelassen". Dies bedeutet, dass durch diesen wenigstens einen weggelassenen Zahn wenigstens eine Nut der Kupplungsglocke nicht durch einen Zahn gefüllt ist. Hierdurch wird ebenfalls der Gesamtölrücklaufquerschnitt vergrößert.

Vorzugsweise weist ein System aus einer Kupplungsglocke und Kupplungsscheiben genau drei Kupplungsscheiben auf.
- Fig. 1: zeigt eine Trennkontur Tk zwischen einer Kupplungsscheibe 1 und einer Kupplungsglocke 2 gemäß des Standes der Technik.
- Fig. 1a: zeigt einen vergrößerten Ausschnitt B aus Fig. 1 (Stand der Technik).
- Fig. 2: zeigt eine Trennkontur Tk zwischen einer Kupplungsscheibe 1 und einer Kupplungsglocke 2 gemäß eines Ausführungsbeispiels der Erfindung.
- Fig. 3: zeigt eine Trennkontur Tk zwischen einer Kupplungsscheibe 1 und einer Kupplungsglocke 2 gemäß eines Ausführungsbeispiels der Erfindung.
- Fig. 4: zeigt eine Kupplungsscheibe 1 im Zusammenspiel mit einer Kupplungsglocke 2 gemäß eines Ausführungsbeispiels der Erfindung.
- Fig. 4a: zeigt einen vergrößerten Ausschnitt C aus Fig. 4.

Die Fign. 1 und 1a zeigen Ausgestaltungen gemäß des Standes der Technik und wurden bereits in der Beschreibungseinleitung gewürdigt.

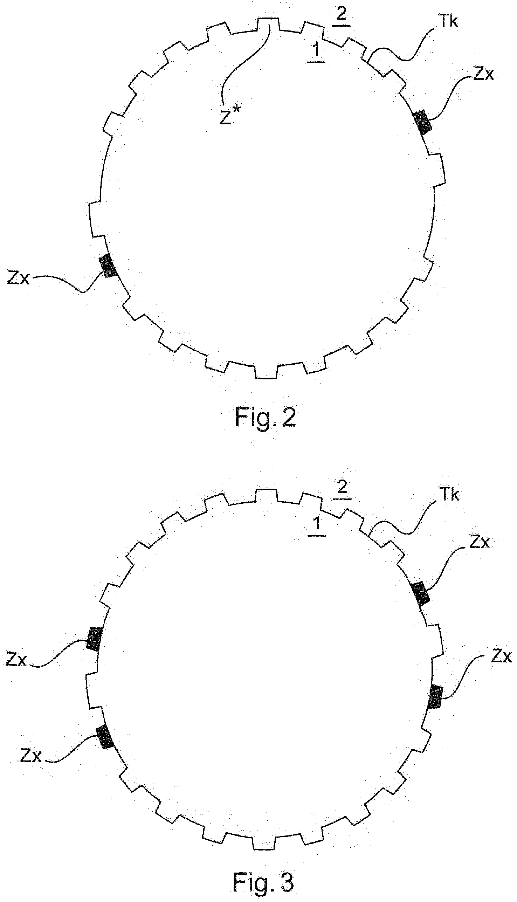

Fig. 2 zeigt eine Trennkontur Tk zwischen einer Kupplungsscheibe 1 und einer Kupplungsglocke 2 gemäß eines Ausführungsbeispiels der Erfindung. Im Vergleich zu Fig. 1 unterscheidet sich die Trennkontur Tk lediglich dadurch, dass zwei Zähne Zx, hier schwarz dargestellt, in der Konstruktion weggelassen sind. Bei einem weggelassenen Zahn Zx handelt es sich um eine Nut in der Kupplungsglocke 2, in welcher sich im montierten Zustand der Kupplungsscheibe kein Zahn befindet.

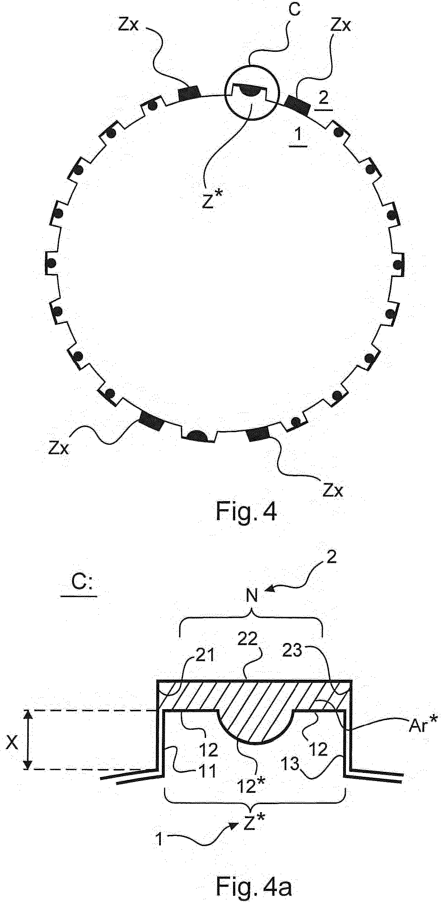

Des Weiteren unterscheidet sich die in Fig. 2 gezeigte Konstruktion dahingehend von der in Fig. 1 bzw. in Fig. 1a gezeigten Konstruktion, dass alle Zähne Z* in Fig. 2 eine erfindungsgemäße Ausnehmung aufweisen, wie detailliert in Fig. 4 dargestellt.

Fig. 3 zeigt analog zu Fig. 2 eine Trennkontur Tk zwischen einer Kupplungsscheibe 1 und einer Kupplungsglocke 2 gemäß eines Ausführungsbeispiels der Erfindung. In dem in Fig. 3 gezeigten Ausführungsbeispiel sind vier Zähne Zx, hier schwarz dargestellt, in der Konstruktion weggelassen, im Gegensatz zu zwei weggelassenen Zähnen Zx in Fig. 2. Weitere Unterschiede liegen zwischen den Konstruktionen der Fign. 2 und 3 nicht vor.

**Fig. 4** zeigt nochmals die Kupplungsscheibe 1 aus Fig. 3, im Vergleich zu den Fign. 1, 2 und 3 wird die Trennkontur zwischen Kupplungsscheibe 1 und Kupplungsglocke 2 allerdings nicht lediglich schematisch dargestellt. Vielmehr sind in Fig. 4 die erfindungsgemäßen Zähne Z* anhand deren Ausnehmungen zu erkennen, wobei diese Ausnehmungen in der Beschreibung der nachfolgenden Fig. 4a unter Bezugnahme auf den Ausschnitt C (siehe Fig. 4) detailliert erläutert werden.

Alle Zähne der in Fig. 4 dargestellten Kupplungsscheibe 1 weisen des Weiteren eine erfindungsgemäße Ausnehmung auf.

**Fig. 4a** zeigt analog zu Fig. 1a den oben erwähnten Bereich (Ausschnitts C) des Zusammenspiels zwischen einem Zahn Z* (der Kupplungsscheibe 1) und einer Nut N (der Kupplungsglocke 2) im Detail. Die dargestellte Nut N der Kupplungsglocke 2 weist in radialer Richtung verlaufende seitliche Flanken 21, 23 auf, sowie eine radial außenliegende, in Umfangsrichtung verlaufende Umfangskante 22. Die Nut ist zum Aufnehmen des dargestellten Zahns Z* der Kupplungsscheibe 1 ausgebildet.

Die Umfangsrichtung entspricht in dieser Detailansicht der horizontalen Richtung in Fig. 4a, wobei die radiale Richtung der vertikalen Richtung in Fig. 4a entspricht. Gleiches gilt im Übrigen für Fig. 1a analog.

Der dargestellte Zahn Z* weist in radialer Richtung verlaufende seitliche Flanken 11, 13 auf, sowie eine radial außenliegende, in Umfangsrichtung verlaufende Umfangskante 12, die allerdings durch eine erfindungsgemäße Ausnehmung 12* unterbrochen wird.

Zwischen der zweigeteilten Umfangskante 12 sowie der Ausnehmung 12* der Kupplungsscheibe 1 und den seitlichen Flanken 21, 23 der Kupplungsglocke 2 sowie der radial außen liegenden Umfangskante 22 der Kupplungsglocke 2 wird ein (vergrößerter) Ölrücklaufquerschnitt Ar* gebildet, der schraffiert dargestellt ist. Der Ölrücklaufquerschnitt im Bereich des Zusammenspiels zwischen allen Zähnen Z (der Kupplungsscheibe 1) und allen Nuten N (der Kupplungsglocke 2) wird als Gesamtölrücklaufquerschnitt definiert. Falls des Weiteren Zähne wie oben beschrieben weggelassen wurden, vergrößert sich der Gesamtölrücklaufquerschnitt zusätzlich.

Die Ausnehmung 12* ist in diesem Ausführungsbeispiel bogenförmig ausgebildet. Darüber hinaus ist die Ausnehmung 12* in diesem Ausführungsbeispiel so angeordnet, dass die seitlichen Flanken 11, 13 durch die Ausnehmung 12* nicht verkürzt werden. Dies bedeutet, dass die Ausnehmung 12* die seitlichen Flanken 11, 13 nicht schneidet.

Gemäß einem weiteren, nicht gezeigten Ausführungsbeispiel ist die Ausnehmung 12* zwar bogenförmig ausgebildet, aber nicht zwingend so angeordnet, dass die seitlichen Flanken 11, 13 durch die Ausnehmung 12* nicht verkürzt werden.

Gemäß einem weiteren, nicht gezeigten Ausführungsbeispiel ist die Ausnehmung 12* nicht zwingend bogenförmig ausgebildet, aber so angeordnet, dass die seitlichen Flanken 11, 13 durch die Ausnehmung 12* nicht verkürzt werden.

Die restlichen Merkmale dieser beiden Abwandlungen entsprechen den unter Bezugnahme auf die Fign. 4 und 4a beschriebenen Merkmalen.

## Patentansprüche

1. System aus zumindest einer Kupplungsscheibe (1) und/oder einer Reibscheibe sowie einer Kupplungsglocke (2) zum Bewirken einer reduzierten Schleppleistung, wobei die Kupplungsscheibe (1) und/oder die Reibscheibe aufweist:
- mehrere radial nach außen ragende Zähne (Z) mit seitlichen Flanken (11, 13) zum Übertragen eines Drehmoments zwischen der Kupplungsscheibe (1) bzw. Reibscheibe und in der Kupplungsglocke (2) vorgesehenen Nuten (N) mit seitlichen Flanken (21, 23) und diese verbindende, radial außen liegende Umfangskanten (22),
wobei jeder Zahn (Z) der Kupplungsscheibe (1) bzw. Reibscheibe eine radial außen liegende, seine seitlichen Flanken (11, 13) verbindende Umfangskante (12) aufweist, und
zwischen dieser Umfangskante (12) eines Zahns (Z) und den seitlichen Flanken (21, 23) einer Nut (N) sowie der radial außen liegenden Umfangskante (22) der Nut (N) ein Ölrücklaufquerschnitt (Ar) gebildet wird, wobei
sich ein Gesamtölrücklaufquerschnitt aus den einzelnen Ölrücklaufquerschnitten (Ar) an jeder Nut (N) zusammensetzt,
**dadurch gekennzeichnet, dass**
die Umfangskante (12) wenigstens eines Zahns (Z*) der Kupplungsscheibe (1) bzw. Reibscheibe eine Ausnehmung (12*) aufweist, um einen vergrößerten Ölrücklaufquerschnitt (Ar*) auszubilden.

2. System gemäß Anspruch 1, wobei
die Ausnehmung (12*) bogenförmig ausgebildet ist.

3. System gemäß einem der vorhergehenden Ansprüche, wobei die Ausnehmung (12*) so zwischen den seitlichen Flanken (11, 13) des Zahns (Z) angeordnet und ausgebildet ist, dass die seitlichen Flanken (11, 13) hierdurch nicht verkürzt werden, sodass ein radial verlaufender Kontaktbereich (X) zwischen den seitlichen Flanken (11, 13) des Zahns (Z) und den seitlichen Flanken (21, 23) der Nut (N) maximal ist.

4. System gemäß einem der vorhergehenden Ansprüche, welche
eine Vielzahl an Zähnen (Z*) mit Ausnehmung (12*) aufweist, oder
ausschließlich Zähne (Z*) mit Ausnehmung (12*) aufweist.

5. System gemäß einem der vorhergehenden Ansprüche, wobei
die Anzahl an Zähnen (Z, Z*) der Kupplungsscheibe (1) bzw. Reibscheibe zu der Anzahl an Nuten (N) der Kupplungsglocke (2) gleich ist.

6. System gemäß Anspruch 5, wobei
die Anzahl an Zähnen (Z, Z*) der Kupplungsscheibe (1) bzw. Reibscheibe geringer ist als die Anzahl an Nuten (N) der Kupplungsglocke (2), wodurch der Gesamtölrücklaufquerschnitt vergrößert wird.

7. System gemäß einem der vorhergehenden Ansprüche, mit insgesamt drei Kupplungsscheiben (1) bzw. Reibscheiben.

## Claims

1. System consisting of at least a clutch disc (1) and/or a friction disc as well as a clutch case (2) for effecting a reduced drag resistance, wherein the clutch disc (1) and/or the friction disc has:
- multiple radially outwardly projecting teeth (Z) with lateral flanks (11, 13) for transmitting a torque between the clutch disc (1) and/or friction disc and grooves (N) provided in the clutch case (2) with lateral flanks (21, 23) and radially outer circumferential edges (22) connecting the latter,
wherein each tooth (Z) of the clutch disc (1) and/or friction disc has a radially outer circumferential edge (12) connecting its lateral flanks (11, 13), and
an oil return cross section (Ar) is formed between this circumferential edge (12) of a tooth (Z) and the lateral flanks (21, 23) of a groove (N) as well as the radially outer circumferential edge (22) of the groove (N), wherein
an overall oil return cross section consists of the individual oil return cross sections (Ar) at each groove (N),
**characterized in that**
the circumferential edge (12) of at least one tooth (Z*) of the clutch disc (1) and/or friction disc has a recess (12*), in order to form an enlarged oil return cross section (Ar*).

2. System according to claim 1, wherein
the recess (12*) is arc-shaped.

3. System according to any one of the preceding claims, wherein the recess (12*) is arranged between the lateral flanks (11, 13) of the tooth (Z) and designed such that the lateral flanks (11, 13) are not shortened as a result, so that a radially extending contact region (X) between the lateral flanks (11, 13) of the tooth (Z) and the lateral flanks (21, 23) of the groove (N) is maximal.

4. System according to any one of the preceding claims, which
has a plurality of teeth (Z*) with a recess (12*), or
only has teeth (Z*) with a recess (12*).

5. System according to any one of the preceding claims, wherein
the number of teeth (Z, Z*) of the clutch disc (1) and/or friction disc is equal to the number of grooves (N) in the clutch case (2).

6. System according to claim 5, wherein
the number of teeth (Z, Z*) of the clutch disc (1) and/or friction disc is lower than the number of grooves (N) in the clutch case (2), as a result of which the overall oil return cross section is increased.

7. System according to any one of the preceding claims, with a total of three clutch discs (1) and/or friction discs.

## Revendications

1. Système composé d'au moins un disque d'embrayage (1) et/ou d'un disque de friction ainsi que d'une cloche d'embrayage (2) permettant d'obtenir une résistance à la traînée réduite, dans lequel le disque d'embrayage (1) et/ou le disque de friction présente :
- plusieurs dents (Z) dépassant radialement vers l'extérieur avec des flancs (11, 13) latéraux pour la transmission d'un couple entre le disque d'embrayage (1) ou le disque de friction et des rainures (N) prévues dans la cloche d'embrayage (2) avec des flancs (21, 23) latéraux et des arêtes périphériques (22) se trouvant radialement à l'extérieur, reliant ceux-ci,
dans lequel chaque dent (Z) du disque d'embrayage (1) ou disque de friction présente une arête périphérique (12) se trouvant radialement à l'extérieur, reliant ses flancs (11, 13) latéraux, et
une section transversale de reflux d'huile (Ar) est formée entre cette arête périphérique (12) d'une dent (Z) et les flancs (21, 23) latéraux d'une rainure (N) ainsi que l'arête périphérique (22) se trouvant radialement à l'extérieur de la rainure (N), dans lequel
une section transversale de reflux d'huile entière se compose de sections transversales de reflux d'huile (Ar) individuelles au niveau de chaque rainure (N),
**caractérisé en ce que**
l'arête périphérique (12) d'au moins d'une dent (Z*) du disque d'embrayage (1) ou disque de friction présente un évidement (12*) afin de former une section transversale de reflux d'huile (Ar*) agrandie.

2. Système selon la revendication 1, dans lequel
l'évidement (12*) est conçu en forme d'arc.

3. Système selon l'une quelconque des revendications précédentes, dans lequel l'évidement (12*) est agencé entre les flancs (11, 13) latéraux de la dent (Z) et conçu de sorte que les flancs (11, 13) latéraux ne soient pas ainsi raccourcis, de sorte qu'une zone de contact (X) s'étendant radialement entre les flancs (11, 13) latéraux de la dent (Z) et les flancs (21, 23) latéraux de la rainure (N) soit maximale.

4. Système selon l'une quelconque des revendications précédentes qui
présente une pluralité de dents (Z*) avec évidement (12*) ou
présente exclusivement des dents (Z*) avec évidement (12*).

5. Système selon l'une quelconque des revendications précédentes, dans lequel
le nombre de dents (Z, Z*) du disque d'embrayage (1) ou disque de friction est identique au nombre de rainures (N) de la cloche d'embrayage (2).

6. Système selon la revendication 5, dans lequel
le nombre de dents (Z, Z*) du disque d'embrayage (1) ou disque de friction est inférieur au nombre de rainures (N) de la cloche d'embrayage (2), ce qui fait que la section transversale de reflux d'huile entière est agrandie.

7. Système selon l'une quelconque des revendications précédentes avec au total trois disques d'embrayage (1) ou disques de friction.
